Europäisches Patentamt

European Patent Office

Office européen des brevets

(11) Veröffentlichungsnummer: **0 384 126 B1**

(12) **EUROPÄISCHE PATENTSCHRIFT**

(45) Veröffentlichungstag der Patentschrift: **15.12.93**

(51) Int. Cl.5: **A01N 31/02**, A01N 25/30

(21) Anmeldenummer: **90101127.0**

(22) Anmeldetag: **20.01.90**

(54) **Versprühbares Flächendesinfektionsmittel.**

(30) Priorität: **18.02.89 DE 3905063**

(43) Veröffentlichungstag der Anmeldung:
**29.08.90 Patentblatt 90/35**

(45) Bekanntmachung des Hinweises auf die
Patenterteilung:
**15.12.93 Patentblatt 93/50**

(84) Benannte Vertragsstaaten:
**AT BE CH DE DK ES FR GB GR IT LI NL SE**

(56) Entgegenhaltungen:
**EP-A- 0 339 448**
**DE-A- 3 229 097**

(73) Patentinhaber: **SCHÜLKE & MAYR GMBH**

**D-22840 Norderstedt(DE)**

(72) Erfinder: **Eggensperger, Heinz, Dr.**
**Alsterallee 13**
**D-2000 Hamburg 63(DE)**
Erfinder: **Nolte, Helmut**
**Dorfstrasse 149**
**D-2000 Tangstedt(DE)**
Erfinder: **Brill, Holger, Dr.**
**Moorbekstrasse 42**
**D-2000 Norderstedt(DE)**
Erfinder: **Löwer, Bernd, Dr.**
**Wellingsbütteler Landstrasse 200**
**D-2000 Hamburg 63(DE)**
Erfinder: **Eggers-Maass, Ute**
**Wiesenredder 82**
**D-2000 Hamburg 73(DE)**

(74) Vertreter: **UEXKÜLL & STOLBERG Patentan-**
**wälte**
**Beselerstrasse 4**
**D-22607 Hamburg (DE)**

Rank Xerox (UK) Business Services
(3.10/3.6/3.3.1)

**Beschreibung**

Die Erfindung betrifft ein versprühbares Flächendesinfektionsmittel auf Basis von niederen aliphatischen Alokoholen und anionischen Tensiden sowie üblichen Zusätzen wie Korrosionsinhibitoren, Farb- und Duftstoffen.

Derartige Flächendesinfektionsmittel sind beispielsweise aus pulvrigen Konzentraten gemäß DE-OS 32 29 097 herstellbar; diese enthalten als anionisches Tensid Alkylsulfonate oder -sulfate, bis zu 20% eines niederen Alkohols als Hydrotrop, eine Genußäure und Gerüststoffe wie Alkalisulfat; diese pulvrig bis körnigen Konzentrate werden beim Einsatz z.B. zur Flächendesinfektion in Krankenhäusern mit Wasser verdünnt. Ferner ist es allgemein bekannt, alkoholische Sprühdesinfektionsmittel mit anionischen Tensiden als Netzmittel einzusetzen.

Derartige Flächendesinfektionsmittel haben zwar den Vorteil, daß sie frei von Aldehyden, Phenolen oder anderen umstrittenen Wirkstoffen sind; jedoch haben die mit Wasser zu verdünnenden Desinfektionsmittel-Konzentrate den Nachteil, daß sie relativ langsam abtrocknen, bei Einsatz in vertretbarer Konzentration eine relativ lange Einwirkungszeit erfordern und bei kürzeren Einwirkungszeiten in entsprechend höheren Konzentration Rückstände auf den zu behandelnden Flächen ergeben oder zu Schädigungen dieser führen können. Bei den alkoholischen Sprühdesinfektionsmitteln, die aufgrund des hohen Alkoholanteiles eine recht kurze Einwirkungszeit und eine rasche Abtrocknung ergeben, ist, abgesehen von der gering reinigenden Wirkung, der hohe Alkoholanteil von Nachteil; insbesondere bei längerem Gebrauch wirkt dieser schädigend auf die zu desinfizierenden Oberflächen, insbesondere Kunststoffflächen wie Polyester- oder Polyacrylatflächen und ergibt Risse oder eine Versprödung; darüber hinaus ist der Umfang mit Desinfektionsmitteln mit einem hohen Alkohlanteil wegen des relativ niedrigen Flammpunktes und der damit verbundenen Gefahren problematisch.

Der Erfindung liegt die Aufgabe zugrunde, ein versprühbares Flächendesinfektionsmittel der eingangs erwähnten Art vorzuschlagen, welches gebrauchsfertig vorliegt und in seiner bakteriziden und fungiziden Wirkung schnell wirksam ist und z.B. nach den DGHM-Richtlinien in 2,5 Minuten und insbesondere auf Acrylglas in einer Minute wirkt, gleichzeitig einen guten Reinigungseffekt zeigt und bei einem gewollt niedrigen Alkoholgehalt eine gute Materialverträglichkeit, einen relativ hohen Flammpunkt und eine relativ rasche Abtrocknung ergibt und letztlich auch bei Langzeitanwendung ein niedriges Allergisierungspotential sowie eine geringe Rückstandsbildung aufweist und eine gute mikrobizide Wirksamkeit auch bei niedrigen Temperaturen besitzt.

Zur Lösung dieser Aufgabe wird ein Flächendesinfektionsmittel gemäß Hauptanspruch vorgeschlagen, wobei besonders vorteilhafte Ausbildungen gemäß Unteransprüchen erreicht werden.

Die erfindungsgemäßen versprühbaren Flächendesinfektionsmittel lassen sich besonders bei der Flächendesinfektion in Hospitälern, Heimen und Arztpraxen und insbesondere in stark schmutzbelasteten Bereichen einsetzen, wo wegen starker Personenfrequenz auch eine schnelle Wirkung und eine schnelle Abtrocknung wesentlich ist, wie beispielsweise in Ambulanzen, bei öffentlichen Bädern oder Saunas, ferner in semimedizinischen Betrieben wie Fußpflegesalons, Sonnenstudios, Frisier- und Massagesalons, sowie ferner im Gaststättenbereich für Küchen und Hotels und auch zur Assanierung von viel und von mehreren Personen benutzten Geräten wie Telefonapparaten.

Überraschenderweise hat sich gezeigt, daß man entgegen der herrschenden Meinung mit sehr viel geringeren Konzentrationen an aliphatischen Alkoholen im Bereich von 20 bis 35 Gew.% eine hinreichende Flächendesinfektion erreicht, wenn nur geringe Mengen einer Kombination eines primären oder sekundären Alkansulfonates oder Alkylsulfates in Kombination mit ebenfalls geringen Mengen eines Alkylethersulfates eingesetzt werden, wobei es allerdings auf die Einhaltung der verschiedensten Parameter hinsichtlich der Komponenten einerseits und der Gewichtsverhältnisse dieser Komponenten zueinander andererseits ankommt.

Je nach Einsatzzweck und Formulierung werden die erfindungsgemäßen Flächendesinfektionsmittel mit einem Säuerungsmittel wie Genußäuren und vorzugsweise Äpfelsäure auf einen pH-Wert von 2 bis 6 eingestellt oder alternativ durch ein Alkalisierungsmittel, vorzugsweise mit Ammoniumhydroxid auf einen pH-Wert von 8 bis 12 eingestellt.

Als Alkoholkopmponente kommen nur Gemische von Ethylalkohol und iso-Propylalkohol, also von Ethanol und 2-Propanol, in Frage, und zwar in einer Menge von 20 bis 35 Gew.% und vorzugsweise in einer Menge von etwa 30 Gew.%.

Bei Verwendung einer Formulierung mit 30 Gew.% Ethanol als alleiniger Alkoholkomponente mit einer Restformulierung von z.B. 0,15 Gew.% des Tensidgemisches und etwa 0,10 bis 0,15 Gew.% Äpfelsäure und Rest Wasser wirkt diese im quantitativen Suspensionsversuch erst nach 5 Minuten; der Flammpunkt liegt bei 27°C. Erhöht man den Ethanolgehalt auf 40 Gew.%, verbessert sich zwar die Wirkung im

EP 0 384 126 B1

Suspensionsversuch auf 3 Minuten, jedoch sinkt der Flammpunkt auf 24°C. Bei 50 Gew.% Ethanol liegt der Flammpunkt bereits bei 20°C, so daß diese Formulierung ungeeignet ist, weil der Flammpunkt eines alkoholischen Sprühdesinfektionsmittels nach den "Sicherheitsregeln zur Vermeidung von Brand- und Explosionsgefahren durch alkoholische Desinfektionsmittel" ZH 1/598 der Berufsgenossenschaft bei 24°C oder höher (nach DIN 51755) liegen muß.

Die Verwendung von n-Propylalkohol bzw. 1-Propanol allein ist wegen des muffigen, schweren Geruchs kaum möglich, wenngleich in mikrobiologischer Hinsicht keine Bedenken bestehen. Die Verwendung von iso-Propylalkohol bzw. 2-Propanol allein verbietet sich wegen des vorherrschenden stechenden Geruchs dieses Alkohols.

Überraschenderweise hat sich gezeigt, daß die besten Ergebnisse erzielt werden, wenn die alkoholische Komponente in einer Menge von 20 bis 35 und vorzugsweise von etwa 30 Gew.% vorliegt und aus einer Mischung von Ethylalkohol zu iso-Propylalkohol in einem Gewichtsverhältnis von 1:2 bis 2:1 und insbesondere von etwa 1: 1,4 vorhanden ist. Dieses ist auch deswegen von Bedeutung, weil die Neiung zu Spannungsrißkorrosionen an Polyacrylflächen (Plexiglas), z.B. für Sonnenbank-Liegeflächen, in der Reihe Wasser Ethanol 2-Propanol 1-Propanol zunimmt.

Bezüglich der Gesamtmenge des Tensidgemisches ist zu beachten, daß sich bei einem Gesamttensidgehalt über 0,5 Gew.% Rückstände auf den behandelten Flächen bilden, so daß ein Anteil von 0,05 bis 0,5 Gew.% und vorzugsweise von 0,15 Gew.% am zweckmäßigsten ist.

Das Gewichtsverhältnis von Alkansulfonaten bzw. Alkylsulfaten zu den Alkylethersulfaten ist ebenfalls wesentlich; es soll in einem Bereich von 10:1 bis 2:1 und vorzugsweise von etwa 4:1 liegen.

Die gezielte Wahl des Verhältnisses ergibt eine Optimierung von hinreichender bzw. vollständiger Benetzung und damit eine sichere Wirksamkeit und effektive Schaumbildung. Das Alkansulfonat selbst ist ein gut schäumendes Tensid, dessen Schaumbildung jedoch durch die Härtebildner des Wassers gebremst wird. Ein gewisser Anteil Ethersulfat ist also zur Schaumstabilisierung erforderlich, während ein zu hoher Anteil von über etwa 2:1 ein übermäßiges Schäumen und damit den Einschluß von zuviel Luft und demzufolge eine nicht sichere vollständige Benetzung der Fläche mit sich bringt.

Außerdem zeigt diese Mischung anionischer Tenside im Gegensatz zu nichtionischen Tensiden auch keine Neigung zu Spannungskorrosion an Plexiglas.

Letztlich ist das Verhältnis von Alkohol/Tensid noch von Bedeutung. Der Gesamtalkoholgehalt zu Gesamtgehalt an anionischem Tensid soll zwischen 300:1 und 50:1 und vorzugsweise 200:1 liegen. Die derzeit üblichen Sprühdesinfektionsmittel weisen Alkohol:Netzungsmittel-Verhältnisse von 450 bis 700:1 auf, wobei meist nichtionische Netzmittel verwendet werden,; diese haben daher keine ausgeprägte Reinigungskraft. Bei Verhältnissen unterhalb 50:1 wird die Rückstandsfrage akut.

Als Alkylethersulfat werden solche mit 10 bis 14 C-Atomen verwendet, die vorzugsweise als Natriumsalz, Magnesiumsalz oder als Monoethanolammoniumsalz bzw. Triethanolammoniumsalz oder als Gemisch dieser vorliegen. Vorzugsweise werden diese Alkylethersulfate in Mengen von 0,01 bis 0,1 Gew.% und vorzugsweise von 0,03 Gew.% eingesetzt.

Als Alkylethersulfate werden Na-Laurylethersulfat mit 2 bis 3 Mol EO, Na-Laurylmyristylethersulfat, Na-Laurylethersulfat und N-Laureth-8-sulfate + Na-oleath-sulfate sowie Mg-Laurylethersulfat, ferner Monoisopropylamin-laurylethersulfat + Cocoamide DEA und Ammonium-laurylethersulfat und Triethanolamin-laruylethersulfat und "Texapon" (Wz)-Sorten bevorzugt.

Die primären oder vorzugsweise sekundären Alkansulfonate oder Alkylsulfonate haben gewöhnlich 10 bis 18 Kohlenstoffatome im Alyklrest und werden in einer Menge von 0,04 bis 0,4 und vorzugsweise in einer Menge von 0,10 bis 0,14 Gew.% eingesetzt. Besonders geeignete Alkansulfonate sind "Mersolate" (Wz), "Hostapur SAS" (Wz) und "Marlon PS" (Wz) mit $C_{15}$-, bzw. $C_{13}$- und $C_{10}$- bis $C_{18}$- oder $C_{15}$- bis $C_{17}$-Schnitten.

Als Alkylsulfate sind insbesondere die "Texapon" (Wz)-Typen geeignet, wie Natrium-, Magnesium-, Ammonium- oder Monoethanolammonium bzw. Triethanolamin-laurylsulfat oder Na-Cetylsulfat.

Als Säuerungsmittel werden vorzugsweise sogenannte Genußsäuren verwendet, wie Äpfelsäure, Zitronensäure, Weinsäure, wenngleich auch anorganische Säuren verwendet werden können. Zur Erzielung eines pH-Wertes von etwa 3,5 werden vorzugsweise 0,13 Gew.% Äpfelsäure eingesetzt.

Soll das erfindungsgemäße Flächendesinfektionsmittel einen alkalischen pH-Wert im Bereich von 8 bis 12 aufweisen, wird vorzugsweise Ammoniumhydroxid, beispielsweise als 25%ige wäßrige Lösung in einer Menge von 0,45 Gew.% zur Erzielung eines pH-Wertes von 10,5 bis 11 eingesetzt.

Der Rest der Formulierung ist Wasser, vorzugsweise entsalztes Wasser.

Im Hinblick auf eine Verhinderung der Allergisierung soll der Anteil an zusätzlichen Korrosionsinhibitoren, Farb- und Aromastoffen bzw. Parfums möglichst niedrig gehalten werden, wobei färbende Naturstoffe und hautverträgliche Zusätze, wie beispielsweise Allantoin oder Kamillenwirkstoffe bevorzugt werden.

3

Im folgenden soll die Erfindung anhand von Beispielen näher erläutert werden.

Beispiel 1

Es wurde ein Flächendesinfektionsmittel der folgenden Zusammensetzung bereitet:

| Bestandteile: | Gew.% |
|---|---|
| Ethanol | 12,5 |
| iso-Propylalkohol | 17,5 |
| $C_{12}$- bis $C_{16}$-Alkansulfonat | 0,25 |
| $C_{12}$- bis $C_{14}$-Alkylethersulfat in Form des Natriumsalzes | 0,05 |
| Äpfelsäure | 0,1 |
| Wasser, entsalzt auf | 100. |

Die erhaltene Flüssigkeit läßt sich leicht versprühen und wurde auf die zu desinfizierenden Flächen aufgebracht und nach etwa 2,5 Minuten abgewischt. Untersuchungen in Anlehnung an die Richtlinien der DGHM bestätigten bei Einwirkungszeiten von etwa 2,5 Minuten die Brauchbarkeit als Flächendesinfektionsmittel zur Hospitalismus-Prophylaxe, wobei selbst auf Kunststoffflächen, wie Polyacrylglas im Dauertest keine Schädigungen der Oberfläche festgestellt wurden.

**Beispiel 2:**

Es wurde ein Flächendesinfektionsmittel mit mit 15% Ethylalkohol und 10% iso-Propylalkohol hergestellt; es wurde eine Mischung aus einem sekundären Alkansulfonat mit 12 bis 16 Kohlenstoffatomen in einer Menge von 0,12 Gew.% und das Triethanolammoniumsalz eines $C_{12}$- bis $C_{14}$-Alkylethersulfats in einer Menge von 0,03 Gew.% zusammen mit 0,4 Gew.% einer 25%igen $NH_4$ OH-Lösung angesetzt. Das Desinfektionsmittel hatte einen pH-Wert von 10,5 bis 11 und zeigte die ansonsten gleichen Eigenschaften wie das Desinfektionsmittel gemäß Beispiel 1.

Beide Produkte wurden in Anlehnung an die Anforderungen, die für die Aufnahme in die VII.Liste der nach den "Richtlinien für die Prüfung chemischer Desinfektionsmittel" geprüften und von der Deutschen Gesellschaft für Hygiene und Mikrobiologie (DGHM) als wirksam befundenen Desinfektionsverfahren erfüllt werden müssen, durchgeführt. Hierbei wurde nachgewiesen, daß Einwirkungszeiten von weniger als 15 Minuten überraschenderweise wesentlich unterschritten werden können.

Die Flächendesinfektion zur Hospitalismus-Prophylaxe und in der allgemeinen Praxis wurden mit den folgenden Versuchen durchgeführt:

1. Qualitativer Suspensionsversuch
2. Quantitativer Suspensionsversuch ohne und mit 0,2% Albumin-Belastung
3. Keimträger-Versuch mit Standard-Baumwollgewebe
4. Quantitativer Flächenversuch.

Als Teststämme wurden die folgenden Stämme eingesetzt:

| Staphylococcus aureus | ATCC | 6538 |
|---|---|---|
| Escherichia coli | ATCC | 11229 |
| Pseudomonas aeruginosa | ATCC | 15442 |
| Proteus mirabilis | ATTCC | 14153 |
| Candida albicans | ATCC | 10231. |

Bei allen Versuchen wurden den Subkulturen zur Inaktivierung 3,0% eines Emulgators (Tween 80), 3,0% Saponin, 0,1% Histidin und 0,1% Cystein (TSHC) zugesetzt.

Die folgenden Tabellen zeigen, daß mit dem Präparat gemäß Beispiel 1 (TPH 5221) gemäß Tabelle 1 im qualitativen Suspensionsversuch es gelang, alle Testkeime innerhalb von 30 Sekunden abzutöten; Tabelle 2 zeigt, daß im quantitativen Suspensionsversuch bei allen Testkeimen innerhalb von einer Minute ein logarithmischer Reduktionsfaktor (log RF) von 5 log-Stufen erreicht wurde bzw. daß es gelang, jeweils unter die Nachweisgrenze zu kommen.

Im Keimträgerversuch mit Standard-Baumwolle gemäß Tabelle 3 konnte nachgewiesen werden, daß bei Staphylococcus aureus nach 30 Minuten und bei Candida albicans nach 15 Minuten und bei allen anderen

4

Keimen nach 5 Minuten keine vermehrungsfähigen Keime mehr nachgewiesen werden konnten.

Ferner konnte beim quantitativen Flächenversuch auf Kunststoff (PVC) und Kacheln gemäß Tabellen 4, 4a und 4b festgestellt werden, daß sich zwar Staphylococcus auereus etwas resistenter als Escherichia coli und Pseudomonas aeruginosa verhielt; bei letzterem wurde bereits nach einer Minute ein Reduktionsfaktor von 5 log-Stufen erreicht, während bei Escherichia coli nach 2 Minuten und bei Staphylococcus aureus nach etwa 2 1/2 Minuten ein Erfolg erzielt wurden

Desweiteren wurde ein quantitativer Flächenversuch in Anlehnung an die DGHM-Richtlinien, jedoch auf Acrylglas, durchgeführt, um spezielle Belange der Solarien zu berücksichtigen. Hier wurde bei den getesteten Keimen Staph. aureus, Ps-aeruginosa und Candida albicans bereits nach einer Minute ein Reduktionsfaktor von mehr als 5 log-Stufen erreicht, wie sich aus Tabelle 5 ergibt.

**Tabelle 1 :**     **Präparat: TPH 5221**     Qualitativer Suspensionsversuch

Einwirkungszeit in Minuten

| Konz. in % | Staph. aureus | | | | | E. coli | | | | | Ps. aeruginosa | | | | | Prot. mirabilis | | | | | Candida albicans | | | | |
|---|---|---|---|---|---|---|---|---|---|---|---|---|---|---|---|---|---|---|---|---|---|---|---|---|---|
| | 0,5 | 1 | 2 | 2,5 | 5 | 0,5 | 1 | 2 | 2,5 | 5 | 0,5 | 1 | 2 | 2,5 | 5 | 0,5 | 1 | 2 | 2,5 | 5 | 0,5 | 1 | 2 | 2,5 | 5 |
| 100,0 | − | − | − | − | − | − | − | − | − | − | − | − | − | − | − | − | − | − | − | − | − | − | − | − | − |
| WK | + | + | + | + | + | + | + | + | + | + | + | + | + | + | + | + | + | + | + | + | + | + | + | + | + |

Inaktivierung  :  TSHC
Zeichenerklärg. :  −  kein Wachstum
                   +  Wachstum

WK = Wachstumkontrolle

EP 0 384 126 B1

**Tabelle 2:**  **Präparat: TPH 5221**  Quantitativer Suspensionsversuch

**Konzentration: 100,0 %**  Einwirkungszeit in Minuten

| | ohne Albumin | | | | mit 0,2 % Albumin | | | |
|---|---|---|---|---|---|---|---|---|
| | 1 | 2 | 2,5 | 3 | 1 | 2 | 2,5 | 3 |
| Staph. aureus | >5,60 | ≥5,11 | ≥5,30 | ≥5,23 | ≥5,60 | ≥5,11 | ≥5,30 | ≥5,23 |
| Kontrolle | 6,60 | 6,11 | 6,30 | 6,23 | 6,60 | 6,11 | 6,30 | 6,23 |
| Pseud. aeruginosa | ≥5,34 | ≥5,18 | ≥5,28 | ≥5,21 | ≥5,34 | ≥5,18 | ≥5,28 | ≥5,21 |
| Kontrolle | 6,34 | 6,18 | 6,28 | 6,21 | 6,34 | 6,18 | 6,28 | 6,21 |
| Candida albicans | ≥5,15 | ≥5,21 | ≥4,98 | ≥5,17 | ≥5,15 | ≥5,21 | ≥4,98 | ≥5,17 |
| Kontrolle | 6,15 | 6,21 | 5,98 | 6,17 | 6,15 | 6,21 | 5,98 | 6,17 |

Ausgangskeimzahl:

Staph. aureus $6 \times 10^9$ ml
Ps. aeruginosa $4,5 \times 10^9$ ml
C. albicans $1 \times 10^9$ ml

Inaktivierung: TLSH

Angaben in logarithmischen Reduktionsfaktoren (log RF)

EP 0 384 126 B1

**Tabelle 3 :**      **Präparat: TPH 5221**        **Keimträgerversuch mit Standard-Baumwolle**

**Einwirkungszeit in Minuten**

| | Staph. aureus | | | | | E. coli | | | | | Ps. aeruginosa | | | | | Prot. mirabilis | | | | | Candida albicans | | | | |
|---|---|---|---|---|---|---|---|---|---|---|---|---|---|---|---|---|---|---|---|---|---|---|---|---|---|
| Konz. in % | 5 | 15 | 30 | 60 | 120 | 5 | 15 | 30 | 60 | 120 | 5 | 15 | 30 | 60 | 120 | 5 | 15 | 30 | 60 | 120 | 5 | 15 | 30 | 60 | 120 |
| 100,0 | + | + | − | − | − | − | − | − | − | − | − | − | − | − | − | − | − | − | − | − | + | − | − | − | − |
| WK | + | + | + | + | + | + | + | + | + | + | + | + | + | + | + | + | + | + | + | + | + | + | + | + | + |

Inaktivierung:      TSHC

Zeichenerklärung:    −      kein Wachstum
                      +      Wachstum
                     WK     Wachstumskontrolle

EP 0 384 126 B1

**Tabelle 4 :**   Präparat: TPH 5221     Quantitativer Flächenversuch

Einwirkungszeit in Minuten     Angaben in logarithmischen Reduktionsfaktoren (log RF)

|  |  | P V C | | | | | K a c h e l n | | | | |
|---|---|---|---|---|---|---|---|---|---|---|---|
| Testkeim | Konz. in % | 1 | 2 | 2,5 | 3 | 5 | 1 | 2 | 2,5 | 3 | 5 |
| Staphylococcus aureus | 100,0 | 4,83 | $\geq$5,81 | $\geq$5,85 | $\geq$5,18 | $\geq$5,22 | 3,41 | 4,75 | $\geq$5,15 | $\geq$5,14 | $\geq$5,27 |
| 1. Kontrolle | log | 6,94 | 6,81 | 6,85 | 6,18 | 6,22 | 6,33 | 6,30 | 6,15 | 6,14 | 6,27 |
| 2. Kontrolle | log  7,96 | | | | | | | | | | |

$KZ = 7 \times 10^9$ ml

KZ = Ausgangskeimzahl
Inaktivierung: TLSH

Temp.        : 22 Grad Celsius
rel. Feuchte : 46 %

EP 0 384 126 B1

**Tabelle 4a :**   **Präparat: TPH 5221**   **Quantitativer Flächenversuch**

**Einwirkungszeit in Minuten**   **Angaben in logarithmischen Reduktionsfaktoren (log RF)**

|  |  | P V C |  |  |  |  | K a c h e l n |  |  |  |  |
|---|---|---|---|---|---|---|---|---|---|---|---|
| Testkeim | Konz. in % | 1 | 2 | 2,5 | 3 | 5 | 1 | 2 | 2,5 | 3 | 5 |
| Escherichia coli | 100,0 | 4,46 | ≥5,23 | ≥5,48 | ≥5,17 | ≥5,22 | 3,68 | ≥5,81 | ≥5,82 | ≥5,69 | ≥5,10 |
| 1. Kontrolle | log | 6,34 | 6,23 | 6,48 | 6,17 | 6,22 | 6,42 | 6,81 | 6,82 | 6,69 | 6,10 |
| 2. Kontrolle | log 7,14 | | | | | | | | | | |

$KZ = 4,5 \times 10^9$ ml

KZ = Ausgangskeimzahl   Temp.   : 22 Grad Celsius
Inaktivierung: TLSH   rel. Feuchte : 46 %

EP 0 384 126 B1

**Tabelle 4b :**  **Quantitativer Flächenversuch**

**Präparat: THI 5221**

Einwirkungszeit in Minuten   Angaben in logarithmischen Reduktionsfaktoren (log RF)

| Testkeim | Konz. in % | P V C | | | | | K a c h e l n | | | | |
|---|---|---|---|---|---|---|---|---|---|---|---|
| | | 1 | 2 | 2,5 | 3 | 5 | 1 | 2 | 2,5 | 3 | 5 |
| Pseudomonas aeruginosa | 100,0 | ≥5,36 | ≥5,78 | ≥5,23 | ≥5,20 | ≥5,26 | ≥5,42 | ≥5,54 | ≥5,25 | ≥5,37 | ≥5,48 |
| 1. Kontrolle | log | 6.36 | 6,78 | 6,23 | 6,20 | 6,26 | 6,42 | 6,54 | 6,25 | 6,37 | 6,48 |
| 2. Kontrolle | log 7,39 | | | | | | | | | | |

KZ = 3 x 10$^9$ ml

KZ = Ausgangskeimzahl
Inaktivierung: TLSH

Temp. : 22 Grad Celsius
rel. Feuchte : 46 %

Es wurde das Präparat gemäß Beispiel 1 in einem quantitativen Flächenversuch auf Acrylglas untersucht; die einwirkungszeit in Minuten und die Angaben in logarithmischen Reduktionsfaktoren (RF) sind in der folgenden Tabelle 5 angegeben.

11

Tablle 5

| ACRYLGLAS | | | | |
|---|---|---|---|---|
| Testkeim | Konz. in% | 1 | 2 | 2,5 |
| Staph.aureus | 100,0 | >6,37 | >6,11 | >6,02 |
| Kontrolle | WHS | 7,37 | 7,11 | 7,02 |
| Ps.aeruginosa | 100,0 | >5,52 | >5,61 | >5,42 |
| Kontrolle | WHS | 6,52 | 6,61 | 6,42 |
| Cand.albicans | 100,0 | >5,48 | >5,06 | >4,98 |
| Kontrolle | WHS | 6,48 | 6,06 | 5,98 |

Ausgangskeimzahl:

Staphyloccocus aureus $= 5,0 \times 10^9$/ml

Pseudomonas aeruginosa $= 2,4 \times 10^9$/ml

Candida albicans $= 1,5 \times 10^8$/ml

Inaktivierung: T S H C

**Patentansprüche**

**1.** Versprühbares Flächendesinfektionsmittel auf Basis von niederen aliphatischen Alkoholen und anionischen Tensiden sowie üblichen Zusätzen wie Korrosionsinhibitoren, Farb- und Duftstoffen, gekennzeichnet durch die Kombination von:

a) 20 bis 35 Gew.% einer Mischung aus Ethylalkohol und iso-Propylalkohol in einem Gewichtsverhältnis von 1:2 bis 2:1,

b) 0,05 bis 0,5 Gew.% einer Mischung von anionischen Tensiden bestehend aus

b-1) 0,04 bis 0,4 Gew.% eines primären oder sekundären Alkansulfonates oder Alkylsulfates mit 10 bis 18 C-Atomen im Alkylrest und

b-2) 0,01 bis 0,1 Gew.% eines Alkylethersulfates mit 10 bis 14 °C-Atomen im Alkylrest in Form des Natrium-, Magnesium- oder Mono- bzw. Triethanolammoniumsalzes, wobei das Gewichtsverhältnis von Alkansulfonaten bzw. Alkylsulfaten (b-1) zu Alkylethersulfaten (b-2) im Bereich von 10:1 bis 2:1 liegt,

wobei das Gewichtsverhältnis von Gesamtalkoholgehalt (a) zu Gesamttensidgehalt (b) in einem Bereich von 300:1 bis 50:1 liegt,

c) einem Säuerungsmittel zur Einstellung eines pH-Wertes von 2 bis 6 oder einem Alkalisierungsmittel zur Einstellung eines pH-Wertes von 8 bis 12, während

d) der Rest Wasser ist,

**2.** Flächendesinfektionsmittel nach Anspruch 1, **dadurch gekennzeichnet,** daß es als Säuerungsmittel 0,05 bis 0,18 Gew.% einer Genußsäure oder als Alkalisierungsmittel 0,20 bis 0,60 Gew.% einer 25%igen $NH_4$-Lösung enthält.

**3.** Flächendesinfektionsmittel nach Anspruch 1, **dadurch gekennzeichnet**, daß es

a) etwa 30 Gew.% einer Alkoholmischung aus Ethanol und iso-Propylalkohol in einem Gewichtsverhältnis von etwa 1:1,4,

b) etwa 0,15 Gew.% eines anionischen Tensidgemisches aus Alkansulfonat zu Alkylethersulfat in einem Gewichtsverhältnis von etwa 4:1,

c) etwa 0,10 bis 0,15 Gew.% Äpfelsäure und

d) Restwasser mit gegebenenfalls üblichen Korrosionsschutzmitteln, Parfum und/oder Farbstoffen enthält.

**Claims**

**1.** Sprayable surface disinfectant based on low aliphatic alcohols and anionic surfactants and usual additives such as corrosion inhibitors, dyes and perfumes, characterized by the combination of:

a) 20 to 35 wt.% of a mixture of ethyl alcohol and isopropyl alcohol in a weight ratio of 1:2 to 2:1,

b) 0.05 to 0.5 wt.% of a mixture of anionic surfactants consisting of

b-1) 0.04 to 0.4 wt.% of a primary or secondary alkane sulphonate or alkyl sulphate with 10 to 18 C atoms in the alkyl group and

b-2) 0.01 to 0.1 wt.% of an alkyl ether sulphate with 10 to 14 C atoms in the alkyl group in the form of the sodium, magnesium or mono- or triethanol ammonium salt, the weight ratio of alkanol sulphonates and alkyl sulphates (b-1) to alkyl ether sulphates (b-2) being in the range of 10:1 to 2:1,

the weight ratio of the total alcohol content (a) to total surfactant content (b) being in a range of 300:1 to 50:1,

c) an acidification agent for the setting of a pH value from 2 to 6 or an alkalization agent for the setting of a pH value from 8 to 12, whilst

d) the remainder is water.

2. Surface disinfectant according to claim 1, **characterized in that** it contains 0.05 to 0.18 wt.% of a food acid as acidification agent or 0.20 to 0.60 wt% of a 25% $NH_4$ solution as alkalization agent.

3. Surface disinfectant according to claim 1, **characterized in that** it contains

a) about 30 wt.% of an alcohol mixture comprising ethanol and isopropyl alcohol in a weight ratio of roughly 1:1.4,

b) about 0.15 wt.% of an anionic surfactant mixture comprising alkane sulphonate and alkyl ether sulphate in a weight ratio of roughly 4:1,

c) about 0.10 to 0.15 wt.% malic acid and

d) water as the remainder optionally with usual corrosion-protection agents, perfume and/or dyes.

## Revendications

1. Agent de désinfection de surface atomisable à base d'alcools aliphatiques inférieurs et d'agents tensioactifs anioniques ainsi que d'additifs usuels tel que inhibiteurs de corrosion, colorants et parfums, caractérisé par la combinaison de:

a) 20 à 35% en poids d'un mélange d'alcool éthylique et d'alcool isopropylique dans un rapport pondéral de 1/2 à 2/1;

b) 0,05 à 0,5% en poids d'un mélange d'agents tensioactifs anioniques constitué de:

b-1) 0,04 à 0,4% en poids d'un alcanesulfonate ou d'un alkylsulfate primaire ou secondaire renfermant de 10 à 18 atomes de carbone dans le radical alkyle, et

b-2) 0,01 à 0,1% en poids d'un alkyléthersulfate renfermant de 10 à 14 atomes de carbone dans le radical alkyle sous la forme de sels de sodium, magnésium ou mono- ou triéthanolammonium,

le rapport pondéral des alcanesulfonates et/ou alkylsulfates (b-1) aux alkyléthersulfates (b-2) étant compris entre 10/1 et 2/1,

le rapport pondéral de la teneur totale en alcool (a) à la teneur totale en agents tensioactifs (b) étant compris entre 300/1 et 50/1;

c) un agent acidifiant pour l'établissement d'une valeur de pH de 2 à 6 ou un agent alcalin pour l'établissement d'une valeur de pH de 8 à 12, alors que;

d) le reste est de l'eau.

2. Agent de désinfection de surface selon la revendication 1, caractérisé en ce qu'il contient comme agent d'acidification de 0,05 à 0,18% en poids d'un adjuvant acide dénommé en allemand "Genußsäure" ou comme agent alcalin de 0,20 à 0,60% en poids d'une solution à 25% de $NH_4$.

3. Agent de désinfection de surface selon la revendication 1, caractérisé en ce qu'il contient:

a) environ 30% en poids d'un mélange d'alcool, à savoir l'éthanol et l'alcool isopropylique, dans un rapport pondéral d'environ 1/1,4;

b) environ 0,15% en poids d'un mélange d'agents tensioactifs anioniques, à savoir l'alcanesulfonate à l'alkyéthersulfate pris dans un rapport pondéral environ égal à 4/1;

c) environ 0,10 à 0,15% en poids d'acide malique; et

d) le reste étant de l'eau, additionnée éventuellement d'agents anticorrosion, parfums et/ou colorants usuels.